Europäisches Patentamt

European Patent Office

Office européen des brevets

(19)

(11) Veröffentlichungsnummer: **0 285 552**
**B1**

(12) **EUROPÄISCHE PATENTSCHRIFT**

(45) Veröffentlichungstag der Patentschrift: **16.01.91**

(51) Int. Cl.⁵: **A 47 J 39/00**

(21) Anmeldenummer: **88810095.5**

(22) Anmeldetag: **17.02.88**

(54) **Vorrichtung zum Kühlen, Aufbewahren und Wiedererwärmen von kompletten Mahlzeiten.**

(30) Priorität: **30.03.87 CH 1210/87**

(43) Veröffentlichungstag der Anmeldung:
**05.10.88 Patentblatt 88/40**

(45) Bekanntmachung des Hinweises auf die
Patenterteilung:
**16.01.91 Patentblatt 91/03**

(84) Benannte Vertragsstaaten:
**AT BE DE ES FR GB IT LU NL SE**

(56) Entgegenhaltungen:
**EP-A-0 203 883**
**DE-A-2 326 633**
**DE-A-2 810 685**
**US-A-3 674 982**
**US-A-4 110 587**

(73) Patentinhaber: **Berndorf Luzern AG**
**Murbacherstrasse 3**
**CH-6003 Luzern (CH)**

(72) Erfinder: **Meier, Hermann**
**Stegenstrasse 21**
**CH-6048 Horw (CH)**

(74) Vertreter: **Seifert, Helmut E.**
**RITSCHER & SEIFERT Patentanwälte VSP**
**Kreuzstrasse 82**
**CH-8032 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft eine Vorrichtung zum Kühlen, Aufbewahren und Wiedererwärmen von kompletten Mahlzeiten, die essfertig vorbereitet, portionenweise angerichtet in entsprechendes Ess- oder Trinkgeschirr eingefüllt und auf einem Tablett angeordnet sind, mit einem Kühlschrank, der zusätzlich zum Kühlaggregat mit einem Generator für induktiv übertragbare elektrische Energie ausgerüstet ist, und mit Tabletts, von denen jedes mindestens eine Induktionsspule aufweist, die beim Einstellen des Tabletts in den Kühlschrank an den Generator angeschlossen wird, und mit Geschirrteilen, die mindestens auf der Bodenaussenfläche eine Metallisierung aufweisen, die für die induktive Erwärmung geeignet ist.

Vorrichtungen der beschriebenen Art sind bekannt und gebräuchlich und beispielsweise in der EP-A-0 203 838 beschrieben. Solche Vorrichtungen werden insbesondere in Betriebskantinen verwendet, wo viele Essensportionen von relativ wenig Personal vorbereitet und auf Tabletts angerichtet gekühlt aufbewahrt werden, um gleichzeitig zum Verzehr verfügbar zu sein, oder in Krankenhäusern, wo die Essensportionen zu unterschiedlichen Tageszeiten an unterschiedlichen Orten serviert werden.

Beim Erwärmen von festen Speisen im Essgeschirr ist darauf zu achten, dass die Temperatur des Geschirrs unter einem Wert bleibt, bei dem die Speisen am Geschirr anhängen und dass so lange Wärme zugeführt wird, bis auch die nicht am Geschirr anliegenden Speisenteile die angestrebte Temperatur erreicht haben. Um diese beiden Bedingungen zu erfüllen, werden gewöhnlich die Leistung des Generators, die Induktivität der Induktionsspulen und die Metallisierung der Geschirrteile derart aufeinander abgestimmt, dass beim Einsetzen der grösstmöglichen Anzahl voll belegter Tabletts die festen Speisen nach etwa 35 Minuten ihre Kerntemperatur erreichen und Getränke in der gleichen Zeit trinkwarm sind, ohne dass beispielsweise Milch eine am Geschirrboden anliegende Schicht bildet.

Diese Abstimmung der verschiedenen elektrischen Baugruppen und Geschirrteile aufeinander hat den Nachteil, dass beim Einsetzen nur eines Teils der Tabletts bzw. nur teilweise belegter Tabletts den Geschirrteilen zuviel Energie zugeleitet wird, so dass die Speisen überhitzt werden, was zu den bereits erwähnten unerwünschten Folgen fühlt.

Der vorliegenden Erfindung lag darum die Aufgabe zugrunde, eine Vorrichtung zu schaffen, die es ermöglicht, Speisen und/oder Getränke auf eine vorgegebene Ess- bzw. Trinktemperatur zu erwärmen, während einer Zeitspanne, die für das Erreichen der Kerntemperatur fester Speisen erforderlich ist, aber ohne das Geschirr- und/oder den am Geschirr anliegenden Teil der Speisen zu überhitzen, auch wenn nur die Induktionsspulen eines Teils der gesamthaft in den Kühlschrank einstellbaren Tabletts an den Generator angeschlossen sind bzw. die Tabletts nur teilweise mit Geschirr belegt sind.

Erfindungsgemäss wird diese Aufgabe mit einer Vorrichtung geuiäss dem Patentanspruch 1 gelöst. Besondere Aus führungs formen der Erfindung sind in dem abhüngigen Ansprüchen 2 bis 9 dargestellt.

Bei einer bevorzugten Ausführungsform der Vorrichtung wird für Milch und Kaffee- bzw. Teewasser Geschirr mit gleicher Form und gleicher Abmessung verwendet, das zum unterschiedlichen Erwärmen des Inhalts unterschiedliche Metallisierungen der Bodenfläche aufweist.

Nachfolgend wird die Erfindung an einer bevorzugten Ausführungsform und mit Hilfe der Figuren beschrieben. Es zeigen:

Fig. 1 die Vorderansicht eines modifizierten Kühlschranks, der Teil der erfindungsgemässen Vorrichtung ist,

Fig. 2 die Draufsicht auf ein zum Aufstellen von Speisen und Getränken vorgesehenes Tablett, das ebenfalls einen Teil der erfindungsgemässen Vorrichtung bildet,

Fig. 3 die schematische Darstellung einer Ausführungsform der Temperaturüberwachungseinrichtung und

Fig. 4 das Diagramm des zeitlichen Anstiegs der Temperatur im Kühlschrank während der Wiedererwärmung bei unterschiedlicher Belegung des Kühlschranks mit Tabletts bzw. der Tabletts mit Geschirr.

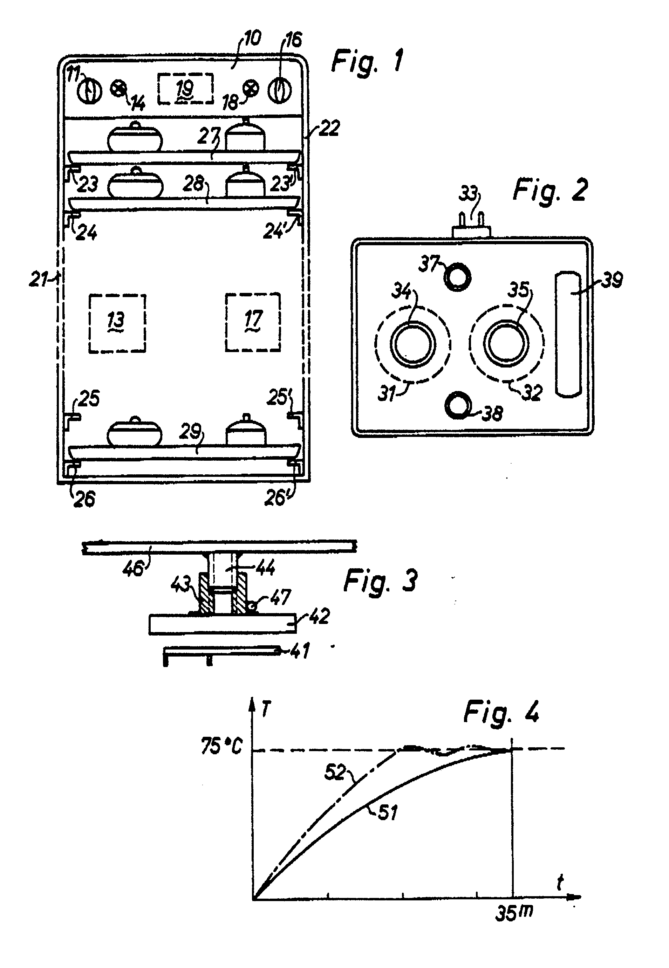

Die Fig. 1 zeigt die Vorderansicht eines modifizierten Kühlschranks, dessen Tür der einfacheren Darstellung wegen nicht gezeichnet ist. An der oberen Frontplatte 10 dieses Kühlschranks ist auf der einen Seite ein erster Schalter 11 befestigt, mit dem ein hinter der Rückwand 12 eingebautes Kühlaggregat 13 ein- und ausgeschaltet bzw. die Kühltemperatur eingestellt werden kann. Dem Schalter ist eine Signallampe 14 zugeordnet, die den Betriebszustand des Kühlaggregats anzeigt. Auf der anderen Seite der oberen Frontplatte ist ein weiterer Schalter 16 befestigt, mit dem ein Generator 17, der induktiv übertragbare elektrische Energie erzeugt, ein- und ausgeschaltet werden kann. Auch diesem Schalter ist eine Signallampe 18 zugeordnet, die den Einschaltzustand des Generators anzeigt. Hinter der oberen Frontplatte ist eine Temperaturüberwachungseinrichtung 19 eingebaut, die nachfolgend anhand der Fig. 3 noch detailliert beschrieben werden wird.

An den Seitenwänden 21, 22 des Kühlschranks sind eine Mehrzahl Tragschienenpaare 23, 23'; 24, 24'; 25, 25'; 26, 26' befestigt, die zum Einschieben von Tabletts 27, 28, 29 vorgesehen sind.

Die Fig. 2 zeigt ein Tablett, das zum Einstellen in den Kühlschrank vorgesehen ist und zwei Induktionsspulen 31, 32 aufweist, die parallel an einen Stecker 33 angeschlossen sind. In die Oberfläche des Tabletts und konzentrisch zu den Induktionsspulen sind kreisförmige Rillen 34, 35 eingearbeitet, in die der nach unten vorstehende Rand von Geschirrteilen eingesetzt werden kann, um letztere in optimaler Stellung zur Induktionsspule zu halten. Weitere Rillen 37, 38 sind für Gefässe mit nicht zu erwärmenden Speisen oder Getränken vorgesehen. Schliesslich enthält das Tablett noch eine Mulde 39 für das Essbesteck.

Die Fig. 3 zeigt eine bevorzugte Ausführungsform der Temperaturüberwachungseinrichtung. Zu dieser Einrichtung gehören eine Induktionsspule 41, die die gleiche Form und die gleiche Induktivität wie die Spulen in den Tabletts aufweist, aber fest im Kühlschrank eingebaut ist, und einen Metallkörper 42, dessen Durchmesser etwa gleich dem Durchmesser der Bodenfläche eines Esstellers ist. Auf der der Spule abgewandten Fläche des Körpers ist eine Hülse 43 angeschweisst. Diese Hülse weist ein Innengewinde auf, das auf das Aussengewinde eines Bolzens 44 aufgeschraubt ist. Der Bolzen ist an einer Tragplatte 46 angeschweisst, die ihrerseits am Rahmen des Kühlschranks befestigt ist. Das Innengewinde der Hülse 43 und das Aussengewinde des Bolzens 44 entsprechen der Gewindetoleranz "fein", so dass ihre Flanken dicht genug aneinanderliegen, um einen guten Wärmeübergang zu ermöglichen. Die beschriebene Befestigung des Körpers 42 ermöglicht, die Wärmeableitung von dem induktiv aufgeheizten Körper 42 an die Platte 46 derart einzustellen, dass die Temperatur des Körpers während des Wiedererwärmens von Speisen der Temperatur eines gefüllten Esstellers etwa entspricht oder dieser Temperatur proportional ist. Im Bereich des Uebergangs von Metallkörper zu Hülse ist ein Widerstandsthermometer 47 befestigt, das über einen (nicht gezeigten) Verstärker den Ein- und Ausschalter für den Generator steuert.

Die Fig. 4 ist eine grafische Darstellung der vom Widerstandsthermometer gemessenen Temperatur in Abhängigkeit von der Zeit beim Erwärmen einer unterschiedlichen Anzahl Essensportionen, d.h. bei unterschiedlicher Belastung des Generators. Längs der Abszisse ist die Erwärmungszeit t und längs der Ordinate die Temperatur T aufgetragen. Die Kurve 51 zeigt den Temperaturverlauf, wenn die grösstmögliche Anzahl Tabletts mit kompletten Mahlzeiten in den Schrank eingestellt, d.h. der Generator maximal belastet ist. Dann erreichen die festen Speisen eine Kerntemperatur von 75°C nach 35 Minuten. Die Kurve 52 zeigt den Temperaturverlauf, wenn der Schrank nur etwa zur Hälfte mit Tabletts beschickt oder die Tabletts nur zur Hälfte belegt sind, d.h. die von den belasteten Induktionsspulen abgegebene Energie etwa verdoppelt ist. Dann wird die maximal zulässige Temperatur schon nach 20 Minuten erreicht und schwankt dann durch alternierendes Ein- und Ausschalten des Generators um diese Temperatur, bis der Generator nach Ablauf der voreingestellten Aufwärmzeit (von 35 Minuten) abgeschaltet wird. Mit dieser Temperaturregelung wird sichergestellt, dass unabhängig von der Belegung des Schranks jeder Teil der Mahlzeit auf die vorgegebene Temperatur erwärmt wird, ohne dass Teile davon überhitzt oder verbrannt werden.

Für eine praktisch erprobte Ausführungsform der beschriebenen Vorrichtung wurde ein Kühlschrank verwendet, in den zwölf Tabletts mit je einer vollständigen Essensportion eingestellt werden konnten. Die Tabletts waren im Kunststoffspritzgussverfahren hergestellt, und jedes Tablett enthielt zwei eingegossene Induktionsspulen mit einem grössten Durchmesser von etwa 17 cm und einer Induktivität von 400 μHy. Auf der Tablettoberseite waren mehrere konzentrisch angeordnete, ringförmige Vertiefungen mit unterschiedlichen Durchmessern eingepresst, die zum Einsetzen der ringförmigen Füsse von Geschirrteilen vorgesehen waren, um das Verrutschen der Geschirrteile beim Servieren zu verhindern, sowie eine längliche Mulde zum Einlegen des Essbestecks. Zwei Gruppen der ringförmigen Vertiefungen waren symmetrisch zu den Induktionsspulen angeordnet, so dass die Metallisierung des da hineingestellten Geschirrs optimal zur zugeordneten Induktionsspule ausgerichtet war. Die Lage der Spulen im Tablett und die Tiefe der Vertiefungen waren mit der Höhe des Fusses der Geschirrteile derart abgestimmt, dass der Abstand zwischen der Spule im Tablett und der Metallisierung an der Bodenunterseite des Geschirrteils etwa 5 bis 8 mm betrug.

Beim Wiedererwärmen fertig zubereiteter, gekühlter Speisen ist darauf zu achten, dass insbesondere die festen Speisen, d.h. Fleisch, Gemüse, Teigwaren oder Kartoffeln nicht auf der Aussenseite verbrannt und im Innern noch kalt sind, sondern eine durchgehend gleichmässige Esstemperatur aufweisen und nicht am Tellerrand anhängen. Dieser Zustand kann nur durch langsames Aufwärmen bei einer relativ niedrigen Temperatur erreicht werden. In vielen Versuchen mit unterschiedlichen Tellergerichten wurde festgestellt, dass ein solches Gericht, das in einem etwa 75°C warmen Teller während 35 Minuten aufgewärmt wurde, von einem frisch zubereiteten Gericht praktisch nicht zu unterscheiden ist.

Um diese Aufwärmbedingungen in einem Kühlschrank und mit Tabletts der oben beschriebenen Art zu erfüllen, wurde in den Kühlschrank ein Generator eingebaut, der induktiv übertragbare elektrische Energie mit einer Frequenz von 22 kHz erzeugte und eine Ausgangsleistung von 1,8 kW aufwies. Der zum Aufwärmen fester Speisen verwendete Teller hatten ein Fassungsvermögen (für Flüssigkeit) von etwa 250 cm³, und der Durchmesser der vom ringförmigen Fuss begrenzten Bodenfläche betrugt 17 cm. Die Metallisierung dieser Bodenfläche bestand aus zwölf konzentrischen Ringen, die vom äusseren Rand beginnend eine Breite von 2 mm und einen Abstand von 3 mm aufwiesen. Die Dicke dieser Ringe lag zwischen 6 bis 9 μ und betrug vorzugsweise 7,5μ.

Zum Wiedererwärmen einer gekühlten Suppe wurde ein Suppenbol verwendet, das ein Fassungsvermögen von etwa 250 cm³ aufwies, dessen Bodenfläche einen Durchmesser von 8,5 cm hatte und dessen obere Oeffnung grösser als die Bodenfläche war. Um Suppe in der gleichen Zeitspanne von 35 Minuten auf Esstemperatur zu erwärmen, wurde eine Metallisierung der Bodenfläche des Bols verwendet, die aus einer mittleren Kreisfläche von 30 mm Durchmesser und fünf konzentrisch darum liegenden Ringen mit einer Breite von 2 mm und einem Abstand von je 3 mm bestand. Die Dicke der Metallisierung betrug vorzugsweise 7,5μ.

Kaffee oder Teewasser sollten wärmer sein als ein Tellergericht oder eine Suppe. Um den Inhalt eines Kaffeekrugs mit einem Fassungsvermögen von 250 cm³ und einer Bodenfläche von 8,5 cm Durchmesser und einer oberen Oeffnung, die kleiner als diese Bodenfläche ist, innert 35 Minuten auf 85°C zu erwärmen, wurde auf die gesamte Bodenfläche eine "einstückige", kreisförmige Metallisierung aufgetragen, deren Dicke wiederum im Bereich zwischen 6 bis 9μ und vorzugsweise bei 7,5μ lag.

Das Aufwärmen von Milch ist besonders heikel. Wenn verhindert werden soll, dass sich am Boden ein Milchkoagulat absetzt, das beim Abwaschen nur schwer zu entfernen ist, und dass sich an der Oberfläche eine Milchhaut bildet, sollte die Aufwärmtemperatur etwa 60°C nicht übersteigen. Um das zu erreichen, wurde ein Gefäss verwendet, das die gleichen Abmessungen und die gleiche Form wie der Kaffee-/Teewasserkrug aufwies und dessen Metallisierung auf der Bodenfläche aus fünf konzentrischen Ringen bestand, die am äusseren Rand beginnend eine Breite von 3 mm, einen Abstand von 2,5 mm und eine Dicke von etwa 8,5 μ aufwiesen.

Das beschriebene Geschirr ermöglicht, die verschiedenen Teile einer Mahlzeit innert 35 Minuten auf unterschiedliche, dem Inhalt der Gefässe entsprechende Temperaturen zu erwärmen, wobei feste Speisen die angestrebte Kerntemperatur erreichen, Kaffee- oder Teewasser die zum Aufgiessen erforderliche hohe Temperatur und Milch nur eine relativ niedrige Temperatur, bei der das Gerinnen und Anhängen am Gefässboden sicher vermieden wird.

Die vorgenannten Daten gelten, wenn der Kühlschrank mit zwölf beladenen Tabletts beschickt ist, d.h. wenn die Ausgangsleistung des Generators auf die 24 Induktionsspulen in den zwölf Tabletts und die fest installierte Induktionsspule der Temperaturüberwachungseinrichtung verteilt ist. Es versteht sich, dass bei der Belegung eines Kühlschranks mit weniger Tabletts oder beim unvollständigen Beladen der Tabletts, d.h. wenn weniger Induktionsspulen ihre Energie an geeignete Empfänger übertragen können, die eingestellten und mit Induktionsspulen induktiv gekoppelten Geschirrteile mehr Energie aufnehmen und darum rascher bzw. auf eine höhere Temperatur aufgewärmt werden als vorgesehen. Um letzteres zu vermeiden, ist die Temperaturüberwachungseinrichtung eingebaut, deren Metallkörper die Temperatur der Bodenfläche eines Tellers simuliert und die den Generator abschaltet, wenn die Temperatur vor Ablauf der eingestellten Aufwärmzeit den vorgegebenen Wert übersteigt, bzw. einschaltet, wenn die Temperatur wieder unter diesen Wert absinkt. Die unterschiedliche Metallisierung der Bodenflächen der verschiedenen Geschirrteile bewirkt unterschiedliche induktive Kopplung, weshalb das Simulieren der Temperatur der Bodenfläche eines Esstellers ausreicht, um den Inhalt jedes Geschirrteils unabhängig von der Belegung des Kühlschranks während der vorgegebenen Zeitspanne auf die vorgesehene Temperatur zu bewirken.

Die beschriebene Vorrichtung kann auf vielerlei Weise abgeändert und an spezielle Arbeitsbedingungen angepasst werden. Beispielsweise kann ein Kühlschrank mit grösserem oder kleinerem Fassungsvermögen verwendet werden oder Tabletts mit nur einer oder mehr zwei Induktionsspulen, wenn die Ausgangsleistung des Generators entsprechend angepasst wird. Es können auch Geschirrteile mit anderen als den beschriebenen Abmessungen und entsprechend angepassten Metallisierungen verwendet werden. Bei der Temperaturüberwachungseinrichtung können die für die einstellbare Wärmeableitung beispielsweise gezeigte Hülse mit dem Innengewinde und der Bolzen mit dem Aussengewinde durch eine zylindrische Hülse und einen zylindrischen Bolzen ersetzt werden, deren Innen bzw. Aussendurchmesser einen Schiebe- oder Haftsitz bilden. Solche und ähnliche Aenderungen sind für den Fachmann naheliegend, weshalb darauf nicht weiter eingegangen wird.

**Patentansprüche**

1. Vorrichtung zum Kühlen, Aufbewahren und Wiedererwärmen von kompletten Mahlzeiten, die essfertig vorbereitet, portionenweise angerichtet in entsprechendes Ess- oder Trinkgeschirr eingefüllt und auf einem Tablett angeordnet sind, mit einem Kühlschrank, der zusätzlich zum Kühlaggregat mit einem Generator für induktiv übertragbare elektrische Energie ausgerüstet ist, und mit Tabletts, von denen jedes mindestens eine Induktionsspule aufweist, die beim Einstellen des Tabletts in den Kühlschrank an den Generator angeschlossen wird, und mit Geschirrteilen, die mindestens auf der Bodenaussenfläche eine Metallisierung aufweisen, die für die induktive Erwärmung geeignet ist, dadurch gekennzeichnet, dass eine Temperaturüberwachungseinrichtung (19) vorhandem ist, die den Generator (17) während der Erwärmungszeitspanne aus-oder einschaltet, wenn die Temperatur des Speisegeschirrs im Bereich der Metallisierung über die vorgegebene Temperatur ansteigt bzw. darunter absinkt, Welche Temperaturüberwachungseinrichtung (19) eine im Kühlschrank fest eingebaute Induktionsspule (41) sowie ein zum induktiven Erwärmen geeignetes Werkstück (42) enthält, dessen Wärmekapazität praktisch der eines gefüllten Esstellers entspricht und dem eine Temperaturmesseinrichtung (47) zugeordnet ist, die den Schalter für die Speisespannung des Generators (17) steuert.

2. Vorrichtung nach Anspruch 1, dadurch gekennzeichnet, dass das Werkstück (42) mittels einer Einrichtung (43, 44, 46) zur einstellbaren Wärmeableitung am Kühlschrank befestigt ist.

3. Vorrichtung nach Anspruch 2, dadurch gekennzeichnet, dass das Werkstück eine Metallscheibe (42) ist mit einer Hülse (43), die in der Mitte der der Induktionsspule abgewandten Oberfläche angeordnet ist, welche Hülse zum Einstellen der Wärmeableitung auf einen am Kühlschrank befestigten Bolzen (44) aus gut wärmeleitendem Material unterschiedliche weit aufschiebbar oder aufschraubbar.

4. Vorrichtung nach Anspruch 1, dadurch gekennzeichnet, dass der Kühlschrank zum Einstellenvon von zwölf Tabletts vorgesehen ist, dass jedes Tablett (Fig. 2) zwei Induktionsspulen (31, 32) mit einer Induktivität von je 400μHy enthält und dass zum Erwärmen mindestens von auf einem Teller angerichteten festen Speisen und in Suppenbols eingefüllter Suppe innerhalb von 35 Minuten auf 75°C der Generator (17) eine Ausgangsleistung von 1,8 kW bei einer Frequenz von 22 kHz erzeugt.

5. Vorrichtung nach Anspruch 4, dadurch gekennzeichnet, dass der Durchmesser der Induktionsspulen (31, 32) praktisch gleich dem Durchmesser der Bodenfläche des grössten verwendeten Geschirrteils ist.

6. Vorrichtung nach Anspruch 4, dadurch gekennzeichnet, dass der Durchmesser der Bodenfläche des Tellers 17 cm beträgt und die Metallisierung aus zwölf konzentrischen Ringenbesteht, die vom äusseren Rand beginnend eine Breite von 2 mm, einen Abstand von 3 mm und eine Dicke im Bereich von 6 bis 9 M und vorzugsweise von 7,5μ aufweisen.

7. Vorrichtung nach Anspruch 4, dadurch gekennzeichnet, dass der Durchmesser der Bodenfläche eines Suppenbols 8,5 cm beträgt und die Metallisierung aus einer mittleren Kreisfläche von 30 mm Durchmesser und fünf dazu konzentrischen Ringer mit einer Breite von 2 mm und einem Abstand von je 3 mm und einer Dicke von vorzugsweise 7,5μ besteht.

8. Vorrichtung nach Anspruch 4, dadurch gekennzeichnet, dass der Durchmesser der Bodenfläche eines Milchkrugs 8,5 cm beträgt und die Metallisierung aus fünf konzentrischen Ringen besteht, die am äusseren Rand beginnend eine Breite von 3 mm, einen Abstand von 2,5 mm und eine Dicke im Bereich von 6 bis 9μ, vorzugsweise von 8,5μ aufweisen.

9. Vorrichtung nach Anspruch 4, dadurch gekennzeichnet, dass die Form und die Abmessungen eines Kaffee oder Teewasserkrugs praktisch gleich denen des Milchkrugs sind und zum Erwärmen des Inhalts auf eine Temperatur von etwa 85°C die Metallisierung die gesamte Bodenfläche bedeckt.

**Revendications**

1. Appareil pour refroidir, conserver et réchauffer des repas complets, prêts pour être consommés, divisés en portions contenues dans des pièces de vaisselle à manger et à boire appropriées et disposées sur un plateau, comprenant un réfrigérateur équipé, outre que du groupe réfrigérateur, d'un générateur pour l'energie électrique transmissible par induction, ainsi que de plateaux dont chacun présente au moins une bobine d'induction, qui est branchée au générateur au moment de son introduction dans le réfrigérateur, et de pièces de vaisselle présentant une métallisation, apte pour le réchauffement par induction, au moins du côté inférieur extérieur, caractérisé en ce qu'il comporte un dispositif de monitorage de la température (19) qui, pendant la période de réchauffement, met en marche ou éteint le générateur (17) lorsque la température de la vaisselle du côté métallisé monte au-dessus ou bien descend au-dessous de la température préétablie, ce dispositif de monitorage de la température (19) contenant une bobine d'induction (41) montée de façon permanente dans le réfrigérateur ainsi qu'une pièce (42) apte pour le réchauffement par induction, dont la capacité calorifique correspond pratiquement au pouvoir d'absorption thermique d'une assiette remplie et qui est reliée à un dispositif de mesurage de la température (477 qui commande l'interrupteur pour la tension d'alimentation du générateur (17).

2. Appareil suivant la revendication 1, caractérisé en ce que la pièces (42) est attachée au réfrigérateur au moyen d'un dispositif (43, 44, 46) pour l'élimination réglable de la chaleur.

3 Appareil suivant la revendication 2, caractérisé en ce que la pièce (42) est un disque métallique équipé d'une douille (43) disposée au centre de la surface du côté opposé à la bobine d'induction, cette douille pouvant être glissée ou bien vissée à différentes distances, pour le réglage du degré d'élimination de la chaleur, sur un boulon (44) en un matériel ayant une bonne conductibilité thermique.

4. Appareil suivant la revendication 1, caractérisé en ce que le réfrigérateur est prévu pour la réception de douze plateaux, que chaque plateau (Fig. 2) est équipé de deux bobines d'induction (31, 32) ayant und inductance de 400 μHy chacune et que, pour le réchauffement d'au moins un plat d'aliments solides et d'une soupe contenue dans des bols à soupe jusqu'à la température de 75°C dans l'espace de 35 minutes, le générateur (17) produit une puissance initiale de 1,8 kW à une fréquence de 22 kHz.

5. Appareil suivant la revendication 4, caractérisé en ce que le diamètre des bobines d'induction (31, 32) est pratiquement égal au diamètre de la surface inférieure de la pièce de vaisellle la plus grande qui soit utilisée.

6. Appareil suivant la revendication 4, caractérisé en ce que le diamètre de la surface inférieure de l'assiette est de 17 cm et que la métallisation consiste en douze anneaux concentriques présentant, à partir du bord extérieur, une largeur de 2 mm, une distance de 3 mm et une épaisseur de l'ordre de 6 à 9 μ et de préférance de 7,5 μ.

7. Appareil suivant la revendication 4, caractérisé en ce que le diamètre de la surface inférieure d'un bol à soupe est de 8,5 cm et que la métallisation consiste en une surface circulaire centrale ayant un diamètre de 30 mm ainsi qu'en cinq anneaux concentriques par rapport à celle-ci, présentant une largeur de 2 mm, une distance de 3 mm et une épaisseur de préférence de 7,5 μ.

8. Appareil suivant la revendication 4 caractéisé en ce que le diamètre de la surface inférieure d'un pot à lait est de 8,5 cm et que la métallisation consiste en cinq anneaux concentriques présentant, à partir du bord extérieur, une largeur de 2 mm, une distance de 2,5 mm et une épaisseur de l'ordre de 6 à 9 u et de préférence de 8, 5μ.

9. Appareil suivant la revendication 4, caractérisé en ce que la géometrie et les dimensions d'un pot à café ou à eau pour le thé sont pratiquement identiques à celles d'un pot à lait et que our le réchauffement du contenu à une température d'environ 85°C la métallisation couvre toute la surface inférieure.

## Claims

1. Apparatus for cooling, preserving and reheating complete meals that have been prepared ready-to-eat, divided into portions, filled into appropriate eating or drinking crockery and arranged on a tray, with a refrigerator that, in addition to the cooling unit, is equipped also with a generator for inductively transferable electric energy and with trays, each of which is provided with at least one induction coil that is connected to the generator when the tablet is placed in the refrigerator, and with crockery components that are provided with metallization suitable for inductive heating at least on their outer bottom surface, characterized in that it comprises a temperature monitoring device (19) that, during the reheating period, will switch the generator (17) on or off whenever the temperture of the metallized parts of the crockery rises above the present temperature or drops below it, where the said temperature monitoring device (19) contains an induction coil (41) that is solidly built into the refrigerator and also a block of material (42) suitable for inductive heating, this block of material having a heat-absorption capacity practically identical to that of a plate filled with food and being equipped with a temperature measuring device (47) that controls the switch for the supply voltage of the generator (17).

2. Apparatus in accordance with Claim 1, characterized in that the block of material (42) is fixed to the refrigerator by means of an arrangement (43, 44, 46) that permits the heat dissipation rate to be adjusted.

3. Apparatus in accordance with Claim 2, characterized in that the block of material is a metal disk (42) and has a sleeve (43) arranged at the centre of its surface facing away from the induction coil, the said sleeve being capable of being slid or screwed for various distances along a bolt (44) made of a good heat-conduction material and fixed to the refrigerator, thereby setting the heat dissipation rate.

4. Apparatus in accordance with Claim 1, characterized in that the refrigerator is designed for accommodating twelve trays, that each tray (Figure 2) comprises two induction coils (31, 32) having an inductance of 400 μHy each and that the generator (17), for the purpose of heating at least the solid food arranged on one plate and soup filled into soup bowls to 75°C within 35 minutes, produces a power output of 1.8 kW at a frequency of 22 kHz. 5.

Apparatus in accordance with Claim 4, characterized in that the diameter of the induction coils (31, 32) is practically the same as the diameter of the bottom surface of the largest piece of crockery in use.

6. Apparatus in accordance with Claim 4, characterized in that the diameter of the bottom surface of the plate amounts to 17 cm and the metallization consists of twelve concentric rings that, starting from the outer edge, have a width of 2 mm, an interspace of 3 mm and a thickness in the range from 6 to 9 μ, and preferably 7.5 μ.

7. Apparatus in accordance with Claim 4, characterized in that the diameter of the bottom surface of a soup bowl amounts to 8.5 cm and the metallization consists of a central circular surface having a diameter of 30 mm and five rings concentric thereto, each having a width of 2 mm, an interspace of 3 mm and a thickness of preferably 7.5 μ.

8. Apparatus in accordance with Claim 4, characterized in that the diameter of the bottom surface of a milk jug amounts to 8.5 cm and the metallization consists of five concentric rings that, starting from the outer edge, have a width of 3 mm, an interspace of 2,5 mm and a thickness in the range from 6 to 9 μ, and preferably 8.5 μ.

9. Apparatus in accordance with Claim 4, characterized in that the form and the dimensions of a coffee-or tea-water jug are practically the same as those of a milk jug and that, for the purpose of warming the contents to a temperature of about 85°C, the metallization covers the entire bottom surface.

Fig. 1

Fig. 2

Fig. 3

Fig. 4